(19) Europäisches Patentamt / European Patent Office / Office européen des brevets

(11) **EP 3 116 152 A1**

(12) **EUROPEAN PATENT APPLICATION**
published in accordance with Art. 153(4) EPC

(43) Date of publication:
**11.01.2017 Bulletin 2017/02**

(51) Int Cl.:
***H04J 14/02*** *(2006.01)*

(21) Application number: **14884440.0**

(22) Date of filing: **22.08.2014**

(86) International application number:
**PCT/CN2014/085030**

(87) International publication number:
**WO 2015/131502 (11.09.2015 Gazette 2015/36)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.03.2014 CN 201410077211**

(71) Applicant: **ZTE Corporation**
**Shenzhen, Guangdong 518057 (CN)**

(72) Inventors:
• **LI, Juhao**
**Shenzhen**
**Guangdong 518057 (CN)**
• **XU, Yingying**
**Shenzhen**
**Guangdong 518057 (CN)**

• **HE, Yongqi**
**Shenzhen**
**Guangdong 518057 (CN)**
• **ZHOU, Weiqin**
**Shenzhen**
**Guangdong 518057 (CN)**
• **SHEN, Bailin**
**Shenzhen**
**Guangdong 518057 (CN)**
• **LIAO, Ping**
**Shenzhen**
**Guangdong 518057 (CN)**

(74) Representative: **Awapatent AB**
**Junkersgatan 1**
**582 35 Linköping (SE)**

(54) **DEVICE AND METHOD FOR ALL-OPTICAL INVERSE MULTIPLEXING BASED ON VARIABLE BANDWIDTH OPTICAL NETWORK**

(57) The embodiments of the present invention disclose a device and method for all-optical inverse multiplexing based on an elastic optical network. The device includes: one or more multicasting modules, a first-stage Bandwidth-Variable Wavelength-Selective Switch (BV-WSS), a second-stage BV-WSS and an inverse multiplexing controller, herein the first-stage BV-WSS is configured to send a channel on which inverse multiplexing needs to be performed into the multicasting module; the multicasting module is configured to perform a multicasting operation on the channel on which inverse multiplexing needs to be performed to obtain a multicasted optical superchannel, and transmit the multicasted optical superchannel to the second-stage BV-WSS; the second-stage BV-WSS is configured to select a sub-waveband at a spectrum position corresponding to a fragment position from the multicasted optical superchannel to form a sub-channel corresponding to the fragment position; and the inverse multiplexing controller is configured to control the multicasting module, the first-stage BV-WSS and the second-stage BV-WSS.

FIG. 4

## Description

Technical Field

The present invention relates to the technical field of optical fiber communication, in particular to a device and a method for all-optical inverse multiplexing based on an elastic optical network.

Background of the Related Art

With the high-speed development of the Internet, data traffic in a core network increases exponentially. In the other aspect, the demands of novel internet applications (such as interactive network television and cloud computing and so on) for bandwidth are unpredictable. The above-mentioned two factors drive the optical network to develop towards flexible, dynamic and efficient directions. Under this background, the industry puts forward the concept of Elastic Optical Networking, which overcomes the limitations of coarse granularity and fixed grids of the traditional Wavelength Division Multiplexing (WDM) optical network, can dynamically and flexibly assign bandwidth resources, can bear service demands from a sub-wavelength level to a super-wavelength level and greatly improves the utilization rate of spectrum resources.

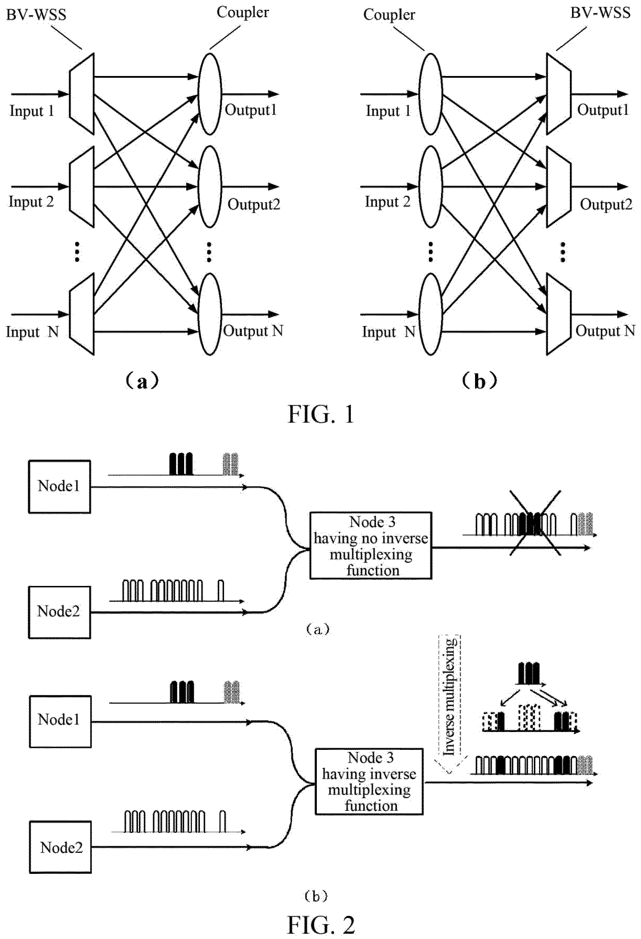

From the view of physical layer, the realization of the elastic optical network includes key technologies of two aspects, i.e., variable speed transceiver and variable-bandwidth optical switching, herein the key of the former one is to use a technology such as the optical Orthogonal Frequency Division Multiplexing (OFDM) technology or the Nyquist Wavelength Division Multiplexing (Nyquist WDM) technology or the like to generate a variable bandwidth optical superchannel, and the key of the later one is that a novel variable bandwidth optical switching device is used for all-optical switching of nodes. An optical OFDM or Nyquist WDM superchannel takes a sub-waveband as a unit, a plurality of sub-wavebands are combined as a segment of channel with continuous spectrum, its bandwidth is flexible and variable and its utilization rate of spectrum is higher. In the other aspect, a Bandwidth-Variable Wavelength-Selective Switch (BV-WSS) based on a Liquid Crystal on Silicon (LCoS) technology is recently widely used as a switching unit to realize variable-bandwidth optical switching, and it can flexibly adjust switching granularity. A switching window is flexibly adjustable from fine granularity (a standard WDM grid which is less than 50GHz) to coarse granularity, and the central frequency is adjustable, thus flexible and variable spectrum assignment can be realized. Typical structures of variable-bandwidth optical switching nodes are as illustrated in FIG.1 and different-bandwidth optical superchannels can be flexibly switched at nodes, and in Fig.1, (a) is a select-and-converge structure and (b) is a broadcast-and-select structure.

From the view of spectrum assignment, compared with WDM, the spectrum assignment granularity of the elastic optical network is more flexible. The elastic optical network adopts the Routing and Spectrum Assignment (RSA) mode, and the network resource entity turns to spectrum from wavelength. Compared with the Routing and Wavelength Assignment (RWA) mode in the traditional WDM network, RSA has higher complexity and greater challenge. RSA needs to consider two limitation conditions, i.e., spectrum continuity limitation and sub-waveband continuity limitation. There is a wavelength continuity limitation in RWA, i.e., wavelengths assigned on the same routing must be continuous. Similarly, there is a spectrum continuity limitation in RSA, i.e., spectrum resources of services on the same routing need to be kept consistent. The sub-waveband continuity limitation refers to that the spectrums of all sub-wavebands of the same service are continuous. Due to the time intervals of different services arriving, the service durations have very great uncertainty, the state of spectrum resources becomes undeterminable after a period of time, a great number of spectrum resource fragments will appear. In addition, these spectrum fragments form a disorder fragment group after a certain period of accumulation, and the disorder fragment group causes a great waste for the network resources and simultaneously causes the problems of service conflict and blocking rate increase in the optical network.

For the problem of spectrum conflict caused by fragments in the elastic optical network, coping policies have already been respectively put forward at the physical layer and the network layer in the existing art. These policies are divided into two types, i.e., non-all-optical type and all-optical type:

(1) The non-all-optical mode mainly includes Make-Before-Break (MBB) policy, spectrum splitting policy, etc. The MBB policy (refer to T. Takagi, et al., ECOC, paper Mo2K3, Sept. 2011) is to adopt an additional transceiver group in the spectrum service in which the conflict occurs to adjust the spectrum position of the service. For the system, this mode of adopting the additional transceiver group will increase the cost. The spectrum splitting policy (refer to Xia M, Proietti R, Dahlfort S, et al. Split spectrum: a multi-channel approach to elastic optical networking [J]. Optics express, 2012, 20(28):29143-29148) is to divide a large data service flow into a plurality of small service flows in electrical field, and the small service flows are respectively mapped to discrete optical carriers to utilize fragment resources with smaller granularity and more disperse distribution to achieve the purpose of improving the utilization rate of the spectrum resources. However, this needs to use a great number of discrete light sources as optical carriers for carrying small data services, and the cost is great.

(2) The all-optical mode mainly includes all-optical spectrum switching, etc. The existing art which is the closest to the present invention is all-optical spectrum switching (refer to Geisler D J, Yin Y, Wen K, et al. Demonstration of spectrum defragmentation in flexible bandwidth optical networking by FWM [J]. Photonics Technology Letters, IEEE, 2011, (23(24): 1893-1895), wherein integral spectrum shifting of an optical superchannel is performed at an intermediate node and the optical superchannel is put into the available spectrum resource band in the network. However, once the idle spectrum fragments in the network are too tiny and disperse and the width thereof is not enough to place the optical superchannel with the corresponding width, this mode fails.

Summary of the Invention

The embodiments of the present invention provide a device and a method for all-optical inverse multiplexing based on an elastic optical network, which can solve the problems of service conflict and blocking rate increase in the optical network, simultaneously can improve the utilization rate of spectrum resources and can achieve the purpose of reducing the cost.

The embodiment of the present invention discloses a device for all-optical inverse multiplexing based on an elastic optical network, including: one or more multicasting modules, a first-stage Bandwidth-Variable Wavelength-Selective Switch (BV-WSS), a second-stage BV-WSS and an inverse multiplexing controller, herein,
the first-stage BV-WSS is configured to send a channel on which inverse multiplexing needs to be performed into the multicasting module;
the multicasting module is configured to perform a multicasting operation on the channel on which inverse multiplexing needs to be performed to obtain a multicasted optical superchannel, and transmit the obtained multicasted optical superchannel to the second-stage BV-WSS;
the second-stage BV-WSS is configured to select a sub-waveband at a spectrum position corresponding to a fragment position from the obtained multicasted optical superchannel to form a sub-channel corresponding to the fragment position; and
the inverse multiplexing controller is configured to control the multicasting module, the first-stage BV-WSS and the second-stage BV-WSS.

Preferably, the inverse multiplexing controller is configured to transmit a second control instruction to each multicasting module, a first control instruction to the first-stage BV-WSS and a third control instruction to the second-stage BV-WSS;
the first-stage BV-WSS is configured to send the channel on which inverse multiplexing needs to be performed into the multicasting module according to the received first control instruction;
the multicasting module is configured to perform the multicasting operation on the channel on which inverse multiplexing needs to be performed according to the received second control instruction to obtain the multicasted optical superchannel, and transmit the multicasted optical superchannel to the second-stage BV-WSS; and
the second-stage BV-WSS is configured to select the sub-waveband at the spectrum position corresponding to the fragment position from the multicasted optical superchannel according to the received third control instruction to form the sub-channel corresponding to the fragment position.

Preferably, each multicasting module includes a pump laser group and a highly nonlinear fiber, herein, the pump laser group is configured to read the received second control instruction from the inverse multiplexing controller, generate a pump laser light according to the second control instruction and send the generated pump laser light into the highly nonlinear fiber; and
the highly nonlinear fiber is configured to receive the pump laser light from the pump laser group and the channel on which inverse multiplexing needs to be performed from the first-stage BV-WSS, perform the multicasting operation on the channel on which inverse multiplexing needs to be performed to obtain the multicasted optical superchannel, and transmit the multicasted optical superchannel to the second-stage BV-WSS.

Preferably, the multicasting operation includes:

generating a copy of a superchannel signal on a plurality of wavelengths.

Preferably, the first control instruction includes demultiplexing data of the first-stage BV-WSS.

Preferably, the second control instruction includes data of a number and frequencies of the pump laser lights generated by the pump laser group.

Preferably, the third control instruction includes filter selection data of the second-stage BV-WSS.

The embodiment of the present invention further discloses a method for all-optical inverse multiplexing based on an elastic optical network, including: an inverse multiplexing controller controlling a multicasting module, a first-stage BV-WSS and a second-stage BV-WSS;
the first-stage BV-WSS sending a channel on which inverse multiplexing needs to be performed into the multicasting module;
the multicasting module performing a multicasting operation on the channel on which inverse multiplexing needs to be performed to obtain a multicasted optical superchannel, and transmit the obtained multicasted optical superchannel to the second-stage BV-WSS; and
the second-stage BV-WSS selecting a sub-waveband at a spectrum position corresponding to a fragment position from the obtained multicasted optical superchannel to form a sub-channel corresponding to the fragment position.

Preferably, the inverse multiplexing controller transmits a second control instruction to the multicasting module, a first control instruction to the first-stage BV-WSS and a third control instruction to the second-stage BV-WSS;

the first-stage BV-WSS sends the channel on which inverse multiplexing needs to be performed into the multicasting module according to the received first control instruction;

the multicasting module performs the multicasting operation on the channel on which inverse multiplexing needs to be performed according to the received second control instruction to obtain the multicasted optical superchannel, and transmits the multicasted optical superchannel to the second-stage BV-WSS; and

the second-stage BV-WSS specifically selects the sub-waveband at the spectrum position corresponding to the fragment position from the multicasted optical superchannel according to the received third control instruction to form the sub-channel corresponding to the fragment position.

Preferably, each multicasting module includes a pump laser group and a highly nonlinear fiber, herein, the pump laser group reads the received second control instruction from the inverse multiplexing controller, generates a pump laser light according to the second control instruction and sends the generated pump laser light into the highly nonlinear fiber; and

the highly nonlinear fiber receives the pump laser light from the pump laser group and the channel on which inverse multiplexing needs to be performed from the first-stage BV-WSS, performs the multicasting operation on the channel on which inverse multiplexing needs to be performed to obtain the multicasted optical superchannel, and transmits the multicasted optical superchannel to the second-stage BV-WSS.

Preferably, the multicasting operation includes:

generating a copy of a superchannel signal on a plurality of wavelengths.

Preferably, the first control instruction includes demultiplexing data of the first-stage BV-WSS.

Preferably, the second control instruction includes data of a number and frequencies of the pump laser light generated by the pump laser group.

Preferably, the third control instruction includes filter selection data of the second-stage BV-WSS.

Through the technical solution provided by the embodiment of the present application, due to the inverse multiplexing function of each multicasting module and the second-stage BV-WSS, the conflict and blockage in the network caused by spectrum continuity limitation and sub-waveband continuity limitation in the elastic optical network are reduced, the problems of service conflict and blocking rate increase in the optical network are solved and the utilization rate of spectrum resources is improved; and Compared with the existing non-all-optical technical solution, the technical solution provided by the embodiment of the present application achieves the purpose of reducing the cost.

Brief Description of Drawings

The drawings described here are used for providing further understanding about the present invention and constitute a part of the present application. The exemplary embodiments and description thereof of the present invention are used for explaining the present invention instead of improperly limiting the present invention. In the drawings:

FIG. 1 is diagrams of two typical structures of a variable bandwidth optical switching node in the existing art.

FIG. 2 is an exemplary diagram of an inverse multiplexing spectrum assignment mechanism of in the existing art.

FIG. 3 is a principle diagram of an FWM-based multicasting technology according to an embodiment of the present invention.

FIG. 4 is a structural schematic diagram of a device for all-optical inverse multiplexing based on an elastic optical network according to an embodiment of the present invention.

FIG. 5 is a flowchart of a method for all-optical inverse multiplexing based on an elastic optical network according to the embodiment of the present invention.

FIG. 6 is an example diagram of an all-optical inverse multiplexing technology based on an elastic optical network according to an embodiment of the present invention.

Preferred Embodiments of the Invention

Firstly, the basic principle of inverse multiplexing and the basic principle of a multicasting technology used in the present invention are introduced.

The concept of inverse multiplexing is to divide a channel into a plurality of sub-channels which are then respectively transmitted. After one channel is inversely multiplexed, all sub-channels may be transmitted through multiple paths and may also be transmitted through a single path. The former has a higher spectrum utilization rate, but the problem of different transmission delays will be introduced. At present, there is no all-optical inverse multiplexing technology in an optical network. The inverse multiplexing spectrum assignment technology adopted in patents particularly refers to the all-optical inverse multiplexing technology, and transmission is performed through a single path.

FIG. 2 illustrates a simple example of an inverse multiplexing spectrum assignment mechanism. In (a) illustrated in FIG. 2, if no processing is performed on a signal from node 1, blockage will be caused at node 3 due to spectrum conflict; and in (b), if a conflict channel from node 1 is divided into two sub-channels by adopting the inverse multiplexing technology, the occurrence of blockage may be avoided. Therefore, the inverse multiplexing technology can improve the spectrum utilization rate.

The inverse multiplexing technology in the embodiments of the present invention is realized based on a multicasting mode.

The multicasting technologies refer to generating a copy of an original superchannel signal on a plurality of wavelengths. The multicasting technologies include many types, may base on Four-Wave Mixing (FWM) and may also base on other modes. In the embodiment of the present invention, an FWM-based multicasting technology is adopted and is realized by adopting a pump light source and a highly nonlinear fiber. The principle of multicasting is the principle of FWM, i.e.,

When three beams of light with different frequencies $\omega_1$, $\omega_2$ and $\omega_3$ are simultaneously input into a fiber, due to a nonlinear effect, lights with frequencies $\omega_4$, $\omega_5$ and $\omega_6$ will be generated, and frequency relationships to follow are:

$$\omega_4=\omega_1+\omega_2-\omega_3;$$

$$\omega_5=\omega_2+\omega_3-\omega_1;$$

$$\omega_6=\omega_1+\omega_3-\omega_2.$$

This phenomenon is called as a Four-Wave Mixing (FWM) effect. When a plurality of light sources are input into a highly nonlinear fiber, every three light sources of the plurality of light sources will produce the above-mentioned effect. By using this effect, the multicasting of the optical superchannel can be realized. The original superchannel and the plurality of pump light sources are jointly input into the highly nonlinear fiber, the newly generated superchannel follows a frequency interval difference between every two pump light sources and thus the multicasting of the original superchannel can be realized.

The multicasting technology adopted in the embodiment of the present invention (refer to Chen, Yuanxiang, et al. "Experimental demonstration of 400 Gb/S optical PDM-OFDM superchannel multicasting by multiple-pump FWM in HNLF", Optics express 21.8 (2013): 9912-9922) is realized by using the FWM effect of co-polarized multiple-pump of a Highly Nonlinear Fiber (HNLF). Supposing that M co-polarized pumps can generate N+1 copies of an original signal, M and N satisfy a relationship as follows:

$$N = \left(\frac{M}{2}\right)□2 = (M-1)□M$$

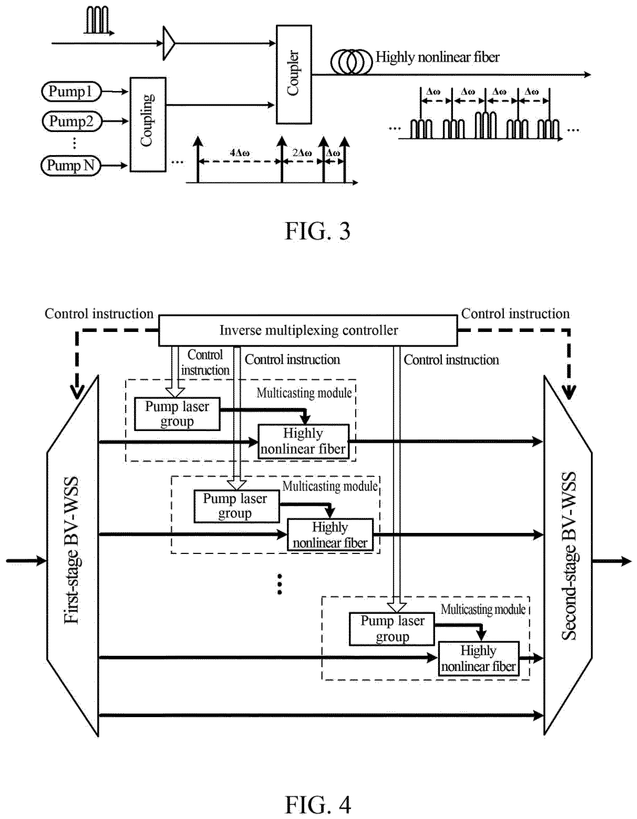

herein, every two of M pumps will produce mutual influence with the original signal and generate two new copies. Frequency intervals between all pumps satisfy an exponential increase relationship ($\Delta co$, $2\Delta\omega$, $4\Delta\omega$, $8\Delta\omega$...), as illustrated in FIG. 3. Herein, frequency positions and frequency intervals of the pumps may be freely designed to realize the relative randomness of copying signal frequency positions.

The above-mentioned spectrum copying and shifting features of multicasting may be used for realizing inverse multiplexing. Specifically, after a multicasting operation is performed on the optical superchannel, a part is filtered out from each newly generated copy to obtain a plurality of sub-channels, and then the plurality of sub-channels are respectively assigned to available spectrum fragments for transmission.

The embodiments of the present invention will be described below in detail in combination with the drawings. The embodiments of the present invention and the features in the embodiments may be freely combined under the situation of no conflict.

FIG. 4 is a structural schematic diagram of a device for all-optical inverse multiplexing based on an elastic optical network according to an embodiment of the present invention. The device for all-optical inverse multiplexing based on the elastic optical network includes one or more multicasting modules, a first-stage Bandwidth-Variable Wavelength-Selective Switch (BV-WSS), a second-stage BV-WSS and an inverse multiplexing controller for controlling each multicasting module, the first-stage BV-WWS and the second-stage BV-WSS.

The first-stage BV-WSS is configured to send a channel on which inverse multiplexing needs to be performed into the multicasting module.

Preferably, the first-stage BV-WSS is specifically configured to send the channel on which inverse multiplexing needs to be performed into the multicasting module according to a received first control instruction.

Each multicasting module is configured to perform a multicasting operation on the channel on which inverse multiplexing needs to be performed to obtain a multicasted optical superchannel, and transmit the obtained multicasted optical superchannel to the second-stage BV-WSS.

Herein, each multicasting module is configured to perform the multicasting operation on the channel on which inverse multiplexing needs to be performed according to a received second control instruction to obtain the multicasted optical superchannel, and transmit the obtained multicasted optical superchannel to the second-stage BV-WSS.

Preferably, the multicasting operation includes:

generating a copy of a superchannel signal on a plurality of wavelengths.

In addition, each multicasting module includes: a pump laser group and a highly nonlinear fiber, herein, the pump laser group is configured to read the received second control instruction from the inverse multiplexing controller, generate the corresponding pump laser light according to the second control instruction and send the generated pump laser light into the highly nonlinear fiber; and

the highly nonlinear fiber is configured to receive the pump laser light from the pump laser group and the channel on which inverse multiplexing needs to be performed from the first-stage BV-WSS, and perform the multicasting operation on the channel on which inverse multiplexing needs to be performed to obtain the multicasted optical superchannel, and transmit the obtained multicasted optical superchannel to the second-stage BV-WSS.

The second-stage BV-WSS is configured to select a sub-waveband at a spectrum position corresponding to a fragment position from the obtained multicasted optical superchannel to form a corresponding sub-channel.

Preferably, the second-stage BV-WSS is configured to select the sub-waveband at the spectrum position corresponding to the fragment position from the obtained multicasted optical superchannel according to a received third control instruction to form the corresponding sub-channel.

The sub-waveband at the spectrum position corresponding to the fragment position is selected from the obtained multicasted optical superchannel to form the corresponding sub-channel, so as to then perform switching combination in a variable bandwidth switching node of FIG. 1, thereby achieving the purpose of inserting the sub-channel into the idle spectrum fragment.

Preferably, the inverse multiplexing controller is configured to transmit the second control instruction to each multicasting module, the first control instruction to the first-stage BV-WSS and the third control instruction to the second-stage BV-WSS.

Preferably, the first control instruction includes demultiplexing data of the first-stage BV-WSS;

the second control instruction includes data of the number and frequencies of the pump laser lights generated by the pump laser group; and

the third control instruction includes filter selection data of the second-stage BV-WSS.

Here, it needs to be stated that, the highly nonlinear fiber is a key device for producing the nonlinear effect. Since the multicasting function described in the technical solution provided by the embodiment of the present invention is based on FWM, the highly nonlinear fiber is needed. A common fiber also has the nonlinear effect, but the coefficient of the nonlinear effect is different. The higher the coefficient is, the more obvious the effect of FWM is, i.e., the higher the conversion efficiency of multicasting is. Therefore, a special highly nonlinear fiber with a very high nonlinear coefficient needs to be used. This kind of fiber is very common in the market and the nonlinear coefficients include $10W^{-1}$/km, etc.

It also needs to be stated that the second-stage BV-WSS generates a filter selection execution instruction according to the control instructions of the inverse multiplexing controller, and the inverse multiplexing controller generates the control instructions according to filter selection data generated by a node control plane.

The node control plane has already existed in the network and can design the number of pumps and pump interval of an all-optical inverse multiplexing module according to the usage of the spectrum resources of the entire network, such that the sub-channels of the new superchannel generated through multicasting exactly correspond to the gaps of the spectrum fragments. The technical solution provided by the embodiment of the present application does not involve how the node control plane designs the parameters of the all-optical inverse multiplexing module (designed in the other control algorithm), and just provides a device which can realize all-optical inverse multiplexing.

The inverse multiplexing controller is further configured to receive control information from the node control plane and generate the first, second and third control instructions, the control information of the node control plane is obtained and generated according to service spectrum and routing information in the network by the node control plane (the node control plane generates the control information according to the service spectrum and routing information in the network and transmits the control information to the inverse multiplexing controller, and the inverse multiplexing controller converts the control information into the control instructions for the control device), which includes: it is to determine the channels on which inverse multiplexing needs to performed and the channels on which inverse multiplexing does not need to be performed; determine the number of multiplexing operations needed for the channel on which inverse multiplexing needs to be performed, and design the number of pumps and the pump frequency interval; and determine the multicasted filter frequency band and bandwidth.

The embodiment of the present invention has the following positive effects:

1. Since inverse multiplexing is performed by using a sub-waveband as the smallest unit and the optical superchannel is flexibly divided in the technical solution provided by the embodiment of the present application, and compared with the all-optical spectrum conversion technology, a great number of tiny spectrum fragments produced in the optical network due to frequent connection and disconnection can be fully utilized and the utilization rate of the spectrum resources is improved.

2. Since the frequency selection function of the BV-WSS is fully utilized and the second-stage BV-WSS can perform the multiplexing function while performing the selection function of the sub-waveband, for the inverse multiplexing module, no additional multiplexer needs to be connected externally and the cost and space of the system are reduced; and

3. Compared with the non-all-optical technical solution, since the technical solution provided by the embodiment of the present application adopts the all-optical solution, OEO conversion and additional transceiver group overhead (see the introduction in the Background of the Related Art) are not needed and the cost is reduced.

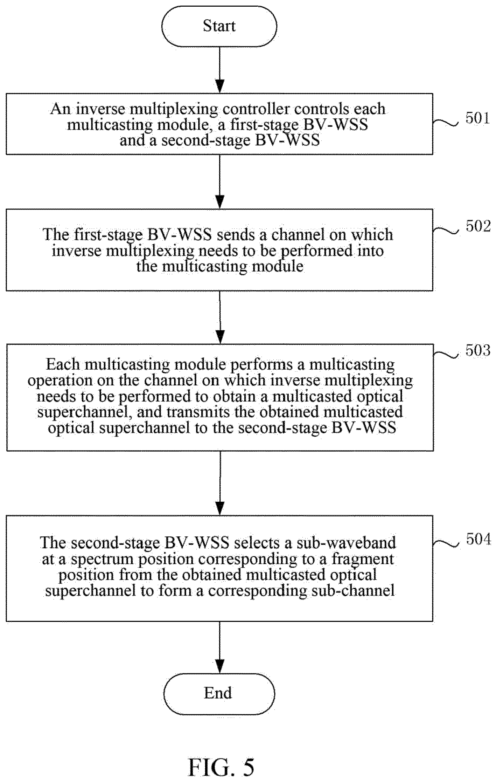

FIG. 5 is a flowchart of a method for all-optical inverse multiplexing based on an elastic optical network according to an embodiment of the present invention. The method includes the following stens:

In step 501, an inverse multiplexing controller controls each multicasting module, a first-stage BV-WSS and a second-stage BV-WSS.

Preferably, the inverse multiplexing controller transmits a second control instruction to each multicasting module, a first control instruction to the first-stage BV-WSS and a third control instruction to the second-stage BV-WSS.

Herein, the first control instruction includes demultiplexing data of the first-stage BV-WSS;
the second control instruction includes data of the number and frequencies of the pump laser lights generated by the pump laser group; and
the third control instruction includes filter selection data of the second-stage BV-WSS.

In step 502, the first-stage BV-WSS sends a channel on which inverse multiplexing needs to be performed into the multicasting module.

Preferably, the first-stage BV-WSS specifically sends the channel on which inverse multiplexing needs to be performed into the multicasting module according to the received first control instruction.

Herein, the control instruction received by the first-stage BV-WSS is the first control instruction.

In step 503, each multicasting module performs a multicasting operation on the channel on which inverse multiplexing needs to be performed to obtain a multicasted optical superchannel, and transmits the obtained multicasted optical superchannel to the second-stage BV-WSS.

Preferably, each multicasting module specifically performs the multicasting operation on the channel on which inverse multiplexing needs to be performed according to the received second control instruction to obtain the multicasted optical superchannel, and transmits the obtained multicasted optical superchannel to the second-stage BV-WSS.

Herein, each multicasting module includes a pump laser group and a highly nonlinear fiber, herein,

the pump laser group reads the received second control instruction from the inverse multiplexing controller, generates a pump laser light according to the second control instruction and sends the generated pump laser light into the highly nonlinear fiber; and
the highly nonlinear fiber receives the pump laser light from the pump laser group and the channel on which inverse multiplexing needs to be performed from the first-stage BV-WSS, performs the multicasting operation on the channel on which inverse multiplexing needs to be performed to obtain the multicasted optical superchannel, and transmit the obtained multicasted optical superchannel to the second-stage BV-WSS.

In addition, the multicasting operation specifically refers to generating a copy of a superchannel signal on a plurality of wavelengths.

In step 504, the second-stage BV-WSS selects a sub-waveband at a spectrum position corresponding to a fragment position from the obtained multicasted optical superchannel to form a corresponding sub-channel.

The sub-waveband at the spectrum position corresponding to the fragment position is selected from the obtained multicasted optical superchannel to form the corresponding sub-channel, so as to then perform switching combination in a variable bandwidth switching node of Fig. 1, thereby achieving the purpose of inserting the sub-channel into the idle spectrum fragment.

Specifically, the control instruction received by the second-stage BV-WSS is the third control instruction.

It needs to be stated that, the inverse multiplexing controller is further configured to receive control information from the node control plane and generate the first, second and third control instructions, the control information of the node control plane is obtained and generated according to service spectrum and routing information in the network by the node control plane (the node control plane generates the control information according to the service spectrum and routing information in the network and transmits the control information to the inverse multiplexing controller, and the inverse multiplexing controller converts the control information into the control instructions for the control device), which includes: it is to determine the channels on which inverse multiplexing needs to performed and the channels on which inverse multiplexing does not need to be performed; determine the number of multiplexing operations needed for the channel to which inverse multiplexing needs to be performed, and design the number of pumps and the pump frequency interval; and determine the multicasted filter frequency band and bandwidth. The node control plane has already existed in the network. The technical solution provided by the present invention does not involve how the node control plane designs the parameters of the all-optical inverse multiplexing module (designed in the other control algorithm), and just provides a module which can realize all-optical inverse multiplexing.

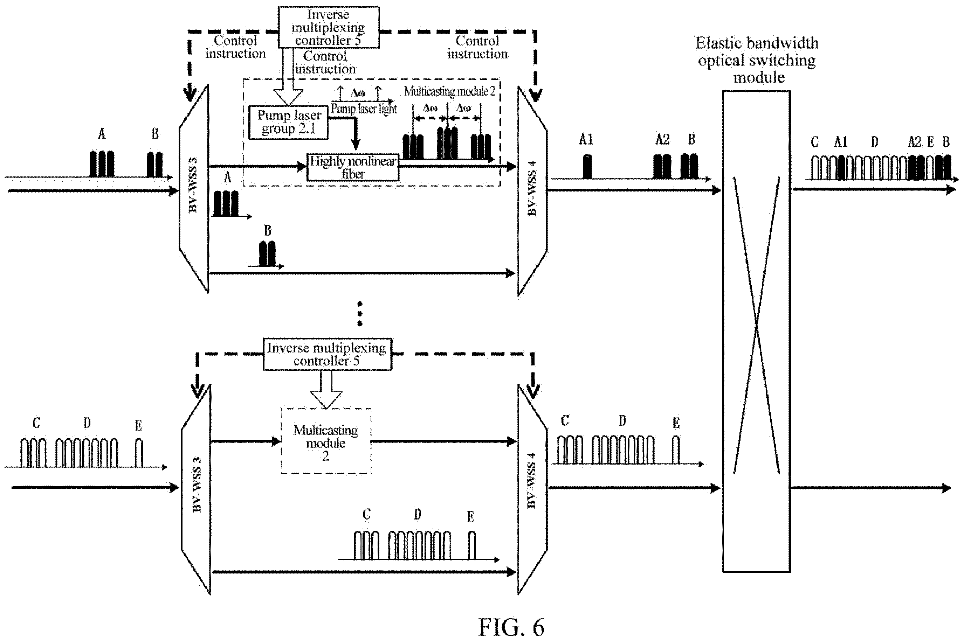

An application example of the present invention will be provided below in combination with FIG. 6. FIG. 6 is an example diagram of an all-optical inverse multiplexing technology based on an elastic optical network according to the present invention. The following specific implementation steps are included:

(1) Structural diagrams of all function modules in an all-optical multiplexing device and spectrum occupation situations in links are as illustrated in FIG. 6. Optical superchannel signals A, B, C, D and E (consisting of optical sub-wavebands) from two different links are input into a variable bandwidth switching node having an all-optical inverse multiplexing function (note: the bandwidth of a unit waveband is used as a grid, which is numbered sequentially 1 to N from left to right, the spectrum central positions of both superchannels A and D are 8, and a conflict will occur in case of direct switching; and no conflict occurs in other spectrum resources, and at positions 4, 12 and 13, there are totally three available spectrum fragments).

(2) By referring to service spectrum and routing information in a network, a node control plane determines that inverse multiplexing needs to be performed on superchannel A and superchannels B, C, D and E only need to pass through directly; superchannel A needs three multicast signals, it is to design that the number of pumps is 2 and a pump frequency interval is 4, and multicasted filter frequencies are at positions 4, 12 and 13 and the bandwidth is 1, and the control signaling is transmitted to an inverse multiplexing controller. The inverse multiplexing controller generates specific control instructions according to the signaling and transmits to BV-WSS 3, a pump laser and BV-WSS 4.

(2) The BV-WSS 3 sends the channel (A) on which inverse multiplexing needs to be performed into a multicasting module according to the control instruction related to channel demultiplexing from the inverse multiplexing controller, and enables the channels (B, C, D and E) on which inverse multiplexing does not need to be performed to pass through directly.

(3) The pump laser groups in the multicasting modules read the control instructions related to the number of pumps (there are two pump laser beams in this example) and pump frequency and power from the inverse multiplexing controller, generate corresponding pump laser light and jointly send the pump laser lights and the optical path signal on which inverse multiplexing needs to be performed into a highly linear fiber.

(4) The BV-WSS 4 performs filter selection on the multicasted channel according to the control instruction from the inverse multiplexing controller to obtain sub-channels A1 and A2, which are signals that may just be inserted into gaps of spectrum fragments. The BV-WSS 4 is simultaneously used as a multiplexer to jointly multiplex the pass-through channels and inverse multiplexing sub-channels from different multicasting modules.

(5) Signals A1, A2, B, C, D and E which pass through the BV-WSS 4 and the inverse multiplexing device are sent into a traditional variable bandwidth optical switching module as illustrated in FIG. 6, different channels are switched to designated outlets for outputting and thus the switching function is completed.

It needs to be pointed out that, although the inverse multiplexing device described in the example is located at a position of the variable bandwidth switching node as illustrated in FIG. 6, the patent is not limited thereto, the method to be protected thereby may be used in any specific variable bandwidth switching node structure, and thus all of those shall be included in the protection scope of the present application. Although the multicasting module in the example is described just through FWM adopting the highly nonlinear fiber and the pump laser group, the patent is not limited thereto, all of those by which all-optical inverse multiplexing is performed on optical superchannels by adopting the multicasting and filter selection mode shall be included in the protection scope, the method to be protected thereby may be used in all systems which can perform multicasting, such as Service-Oriented Architecture (SOA) devices and so on, and thus all of those shall be included in the protection scope.

The embodiments described above are just preferred embodiments of the present invention and are not used for limiting the protection scope of the present invention. Any modification, equivalent replacement, improvement and the like made within the rule and principle of the present invention shall be included in the protection scope of the present invention.

Industrial Applicability

Through the technical solution provided by the embodiment of the present invention, due to inverse multiplexing functions of the multicasting module and the second-stage BV-WSS, the situations of conflict and blockage in the network caused by spectrum continuity limitation and sub-waveband continuity limitation in the elastic optical network are reduced, the problems of service conflict and blocking rate increase in the optical network are solved and the utilization rate of spectrum resources is improved; and compared with the existing non-all-optical technical solution, the purpose of reducing the cost is achieved.

## Claims

1. A device for all-optical inverse multiplexing based on an elastic optical network, comprising: one or more multicasting modules, a first-stage Bandwidth-Variable Wavelength-Selective Switch (BV-WSS), a second-stage BV-WSS and an inverse multiplexing controller, wherein,
the first-stage BV-WSS is configured to send a channel on which inverse multiplexing needs to be performed into the multicasting module;
the multicasting module is configured to perform a multicasting operation on the channel on which inverse multiplexing needs to be performed to obtain a multicasted optical superchannel, and transmit the multicasted optical superchannel to the second-stage BV-WSS;
the second-stage BV-WSS is configured to select a sub-waveband at a spectrum position corresponding to a fragment position from the multicasted optical superchannel to form a sub-channel corresponding to the fragment position; and
the inverse multiplexing controller is configured to control the multicasting module, the first-stage BV-WSS and the second-stage BV-WSS.

2. The device for all-optical inverse multiplexing according to claim 1, wherein the inverse multiplexing controller is configured to transmit a second control instruction to the multicasting module, a first control instruction to the first-stage BV-WSS and a third control instruction to the second-stage BV-WSS;
the first-stage BV-WSS is configured to send the channel on which inverse multiplexing needs to be performed into the multicasting module according to the received first control instruction;
the multicasting module is configured to perform the multicasting operation on the channel on which inverse multiplexing needs to be performed according to the received second control instruction to obtain the multicasted optical superchannel, and transmit the multicasted optical superchannel to the second-stage BV-WSS; and
the second-stage BV-WSS is configured to select the sub-waveband at the spectrum position corresponding to the fragment position from the multicasted optical superchannel according to the received third control instruction to form the sub-channel corresponding to the fragment position.

3. The device for all-optical inverse multiplexing according to claim 2, wherein the multicasting module comprises a pump laser group and a highly nonlinear fiber, wherein,
the pump laser group is configured to read the received second control instruction from the inverse multiplexing controller, generate a pump laser light according to the second control instruction and send the generated pump laser light into the highly nonlinear fiber; and
the highly nonlinear fiber is configured to receive the pump laser light from the pump laser group and the channel on which inverse multiplexing needs to be performed from the first-stage BV-WSS, perform the multicasting operation on the channel on which inverse multiplexing needs to be performed to obtain the multicasted optical superchannel, and transmit the multicasted optical superchannel to the second-stage BV-WSS.

4. The device for all-optical inverse multiplexing according to claim 1, 2 or 3, wherein the multicasting operation comprises:

    generating a copy of a superchannel signal on a plurality of wavelengths.

5. The device for all-optical inverse multiplexing according to claim 2, wherein the first control instruction comprises demultiplexing data of the first-stage BV-WSS.

6. The device for all-optical inverse multiplexing according to claim 2, wherein the second control instruction comprises data of a number and frequencies of the pump laser lights generated by the pump laser group.

7. The device for all-optical inverse multiplexing according to claim 2, wherein the third control instruction comprises filter selection data of the second-stage BV-WSS.

8. A method for all-optical inverse multiplexing based on an elastic optical network, comprising:

    an inverse multiplexing controller controlling a multicasting module, a first-stage BV-WSS and a second-stage BV-WSS;
    the first-stage BV-WSS sending a channel on which inverse multiplexing needs to be performed into the multicasting module;
    the multicasting module performing a multicasting operation on the channel on which inverse multiplexing needs to be performed to obtain a multicasted optical superchannel, and transmit the multicasted optical superchannel to the second-stage BV-WSS; and
    the second-stage BV-WSS selecting a sub-waveband at a spectrum position corresponding to a fragment position from the multicasted optical superchannel to form a sub-channel corresponding to the fragment position.

9. The method for all-optical inverse multiplexing according to claim 8, wherein the inverse multiplexing controller transmits a second control instruction to the multicasting module, a first control instruction to the first-stage BV-WSS and a third control instruction to the second-stage BV-WSS;

the first-stage BV-WSS sends the channel on which inverse multiplexing needs to be performed into the multicasting module according to the received first control instruction;

the multicasting module performs the multicasting operation on the channel on which inverse multiplexing needs to be performed according to the received second control instruction to obtain the multicasted optical superchannel, and transmits the multicasted optical superchannel to the second-stage BV-WSS; and

the second-stage BV-WSS selects the sub-waveband at the spectrum position corresponding to the fragment position from the multicasted optical superchannel according to the received third control instruction to form the sub-channel corresponding to the fragment position.

10. The method for all-optical inverse multiplexing according to claim 9, wherein the multicasting module comprises a pump laser group and a highly nonlinear fiber, wherein,

the pump laser group reads the received second control instruction from the inverse multiplexing controller, generates a pump laser light according to the second control instruction and sends the generated pump laser light into the highly nonlinear fiber; and

the highly nonlinear fiber receives the pump laser light from the pump laser group and the channel on which inverse multiplexing needs to be performed from the first-stage BV-WSS, performs the multicasting operation on the channel on which inverse multiplexing needs to be performed to obtain the multicasted optical superchannel, and transmits the multicasted optical superchannel to the second-stage BV-WSS.

11. The method for all-optical inverse multiplexing according to claim 8, 9 or 10, wherein the multicasting operation comprises:

    generating a copy of a superchannel signal on a plurality of wavelengths.

12. The method for all-optical inverse multiplexing according to claim 9, wherein the first control instruction comprises demultiplexing data of the first-stage BV-WSS.

13. The method for all-optical inverse multiplexing according to claim 9, wherein the second control instruction comprises data of a number and frequencies of the pump laser lights generated by the pump laser group.

14. The method for all-optical inverse multiplexing according to claim 9, wherein the third control instruction comprises filter selection data of the second-stage BV-WSS.

FIG. 1

FIG. 2

Highly nonlinear fiber

Pump1

Pump2

Pump N

Coupling

Coupler

$4\Delta\omega$  $2\Delta\omega$  $\Delta\omega$

$\Delta\omega$  $\Delta\omega$  $\Delta\omega$  $\Delta\omega$

FIG. 3

Control instruction

Inverse multiplexing controller

Control instruction

Control
instruction

Control instruction

Control instruction

Multicasting module

Pump laser
group

Highly
nonlinear fiber

Multicasting module

Pump laser
group

Highly
nonlinear fiber

Multicasting module

Pump laser
group

Highly
nonlinear fiber

First-stage BV-WSS

Second-stage BV-WSS

FIG. 4

Start

An inverse multiplexing controller controls each
multicasting module, a first-stage BV-WSS
and a second-stage BV-WSS — 501

The first-stage BV-WSS sends a channel on which
inverse multiplexing needs to be performed into
the multicasting module — 502

Each multicasting module performs a multicasting
operation on the channel on which inverse multiplexing
needs to be performed to obtain a multicasted optical
superchannel, and transmits the obtained multicasted
optical superchannel to the second-stage BV-WSS — 503

The second-stage BV-WSS selects a sub-waveband
at a spectrum position corresponding to a fragment
position from the obtained multicasted optical
superchannel to form a corresponding sub-channel — 504

End

FIG. 5

FIG. 6

## INTERNATIONAL SEARCH REPORT

| International application No. |
| --- |
| **PCT/CN2014/085030** |

### A. CLASSIFICATION OF SUBJECT MATTER

H04J 14/02 (2006.01) i

According to International Patent Classification (IPC) or to both national classification and IPC

### B. FIELDS SEARCHED

Minimum documentation searched (classification system followed by classification symbols)

H04J, H04B, H04L

Documentation searched other than minimum documentation to the extent that such documents are included in the fields searched

Electronic data base consulted during the international search (name of data base and, where practicable, search terms used)

CPRSABS; CNTXT; CNKI; VEN: fragment, spectrum piece, all optical, +multiplex, backward, bandwidth variable, chip, spectrum, segement, element, idle, free

### C. DOCUMENTS CONSIDERED TO BE RELEVANT

| Category* | Citation of document, with indication, where appropriate, of the relevant passages | Relevant to claim No. |
| --- | --- | --- |
| X | CN 102821332 A (WUHAN RESEARCH INSTITUTE OF POSTS AND TELECOMMUNICATIONS), 12 December 2012 (12.12.2012), description, paragraphs [0021]-[0036], and figures 1-3 | 1-14 |
| A | CN 103338077 A (PEKING UNIVERSITY), 02 October 2013 (02.10.2013), the whole document | 1-14 |
| A | CN 103338162 A (BEIJING UNIVERSITY OF POSTS AND TELECOMMUNICATIONS), 02 October 2013 (02.10.2013), the whole document | 1-14 |

☐ Further documents are listed in the continuation of Box C.    ☒ See patent family annex.

| *   Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| 01 December 2014 (01.12.2014) | **10 December 2014 (10.12.2014)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **XU, Qian** Telephone No.: (86-10) **62411433** |
| --- | --- |

Form PCT/ISA/210 (second sheet) (July 2009)

## INTERNATIONAL SEARCH REPORT
### Information on patent family members

International application No.

**PCT/CN2014/085030**

| Patent Documents referred in the Report | Publication Date | Patent Family | Publication Date |
|---|---|---|---|
| CN 102821332 A | 12 December 2012 | None | |
| CN 103338077 A | 02 October 2013 | None | |
| CN 103338162 A | 02 October 2013 | None | |

Form PCT/ISA/210 (patent family annex) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **T. TAKAGI et al.** *ECOC,* 03 September 2011
- **XIA M ; PROIETTI R ; DAHLFORT S et al.** Split spectrum: a multi-channel approach to elastic optical networking. *Optics express,* 2012, vol. 20 (28), 29143-29148

- **GEISLER D J ; YIN Y ; WEN K et al.** Demonstration of spectrum defragmentation in flexible bandwidth optical networking by FWM. *Photonics Technology Letters, IEEE,* 2011, vol. 23 (24), 1893-1895
- **CHEN ; YUANXIANG et al.** Experimental demonstration of 400 Gb/S optical PDM-OFDM superchannel multicasting by multiple-pump FWM in HNLF. *Optics express,* 2013, vol. 21.8, 9912-9922